# EUROPÄISCHE PATENTSCHRIFT

(11) **EP 0 442 454 B1**
(45) Veröffentlichungstag und Bekanntmachung des Hinweises auf die Patenterteilung: **02.02.1994**
(21) Anmeldenummer: 91101976.8
(22) Anmeldetag: 13.02.1991
(51) Int. Cl.: C02F 1/34, C02F 1/36

(54) **Verfahren und Vorrichtung zur Entfernung von Schadstoffen aus Untergrund-Formationen im Erdboden**
Method and apparatus for removing wastes from sub-soil formations in the ground
Procédé et dispositif pour éliminer des résidus à partir de formations de sous-sol dans la terre

(30) Priorität: 15.02.1990 DE 4004711
(43) Veröffentlichungstag der Anmeldung: 21.08.1991
(73) Patentinhaber: Husten, Peter F., CH-9548 Jakobstal (CH)
(72) Erfinder: Husten, Peter F., CH-9548 Jakobstal (CH)
(74) Vertreter: Riebling, Peter, Dr.-Ing.

(56) Entgegenhaltungen:
- DE-A- 2 542 965
- DE-C- 3 805 200
- US-A- 4 358 373
- US-A- 4 443 322
- SOVIET INVENTIONS ILLUSTRA- TED, CH Sektion, Woche 8401, 15. Februar 1984 DERWENT PUBLICATIONS LTD., London, X 25

## Beschreibung

Gegenstand der vorliegenden Erfindung ist ein Verfahren und Vorrichtung zur Entfernung von Schadstoffen aus Untergrundformationen im Erdboden, wobei zur Entfernung von insbesondere leichtflüchtigen Halogenkohlenwasserstoffen (zum Beispiel LHKW) Grundwasser über eine längere Zeit abgepumpt wird, wodurch die Schadstoffe mitgerissen werden und an der Oberfläche das Grundwasser durch Abtrennen der Schadstoffe gereinigt wird (Stripping).

Die vorliegende Erfindung befasst sich demnach zunächst mit dem Verfahren zur Reinigung von Bodenverunreinigungen, verursacht durch das Eindringen von leicht flüchtigen Hallogenkohlenwasserstoffen (LHKW) in Wasser angereicherten Bodenzonen, wobei optimale Ergebnisse dann erzielt werden, wenn die Bodenzonen wassergesättigt sind.

Es ist ein Grundproblem unserer Industriegesellschaft, daß einmal in den Boden eingedrungene Bodenverunreinigungen nur schwer wieder aus dem Boden herauszubekommen sind.

Es ist zwar ein längerdauerndes Abpumpen von Grundwasser bekannt, mit dem das Grundwasser aufgrund der beim Abpumpen entstehenden Strömung an den Schadstoffen vorbeigeführt wird, diese Schadstoffe mitreisst und an die Oberfläche bringt. An der Oberfläche muß dann das Grundwasser entsprechend gereinigt werden durch Abtrennung der Schadstoffe. Dieses Verfahren ist als Stripping bekannt geworden.

Dieses sogenannte Stripping funktioniert bei bestimmten Schadstoffen, jedoch sehr langsam, die - wie die LHKW - eine höhere Dichte als Wasser besitzen und schlecht wasserlöslich sind.

Der vorliegenden Erfindung liegt deshalb die Aufgabe zugrunde, ein Verfahren der eingangs genannten Art so weiterzubilden, daß auch Schadstoffe höherer Dichte als die von Wasser und die in Wasser schlecht löslich sind, einwandfrei aus wasserangereicherten Bodenformationen entfernt werden können.

Zur Lösung der gestellten Aufgabe ist die Erfindung dadurch gekennzeichnet, daß auch das das Grundwasser führende Erdreich beschallt wird.

Die Erfindung betrifft demnach ein Verfahren und die Vorrichtung zur Beschallung von Böden/Fels des Untergrundes und Großbauten, wobei als Schallsender ein akustischer Pulsgenerator vergesehen ist, der über Platten elektromagnetische Schwingungen aussendet, wobei Platten mit (X) und ohne (Y) Einsatz von ferromagnetischen Materialien verwendet werden.

Zweck:

Abstrahlung hoher akustischer Energiedichte in Bohrungen oder Brunnen, Gräben oder Schächten zur Beschleunigung von physikalischchemischen Vorgängen in den diese umgebenden Böden und Gesteinen (A), ferner zur Reinigung (B) von Filterrohren, auch geschlitzten oder perforierten Verrohrungen, dem Aufbrechen von Verkrustungen (B) und der Beseitigung von Feinmaterial (C) im Porenraum in der direkten Umgebung einer Bohrung oder eines Brunnens etc.
(A) zielt auf eine schnellere und gründlichere De-Kontaminierung von Böden, die mit flüssigen und gasförmigen Schadstoffen verseucht sind, wie Chlorkohlenwasserstoffe, Lösungsmittel, Benzin etc.
(B) Effiziente, zerstörungsfreie Reinigung des Brunnenausbaus zur Verbesserung der Förderleistung.
(C) Erhöhung der Permeabilität im Nahbereich der Bohrung zur Verbesserung der Förderleistung.

Zur Verwirklichung der gegebenen technischen Lehre gibt es eine Vielzahl möglicher Ausführungsformen, die sämtliche unter den Erfindungsgedanken der vorliegenden Erfindung fallen.

In einer ersten Ausführungsform der vorliegenden Erfindung ist es vorgesehen, daß in den zu reinigenden Boden im Bereich der vermuteten größten Verschmutzung ein vertikales Bohrloch angebracht wird, welches bevorzugt bis in den Grundwasserbereich reichen sollte.

In radialem Abstand von diesem zentrisch angebrachten Bohrloch werden gleichmässig auf einem Kreis am Umfang verteilt angeordnete weitere Bohrungen angeordnet, in die Druckwasser eingeführt wird, welches über die mittlere zentrale und beschallte Bohrung wieder entnommen wird.

Die damit verbundenen Effekte werden später noch näher erläutert.

Statt des hier verwendeten Druckwassers könnte auch Druckluft verwendet werden, die gleichmässig über jeden an der Peripherie angebrachten Schacht in den Boden gepresst wird und über das mittlere beschallte Bohrloch wieder entnommen (abgesaugt) wird.

In einer dritten Ausführungsform ist eine Kombination zwischen einer Druckwasserversorgung und einer Druckluftversorgung vorgesehen. Hier wurde dann in einer Reihe von an der Peripherie angeordneten Bohrlöchern Druckluft eingeblasen werden und in andere Bohrlöcher Druckwasser eingepresst werden, so daß ein perlendes Druck-Gas-Gemisch entsteht, welches über das mittlere beschallte Bohrloch entnommen wird.

Bei Verunreinigung einer größeren Fläche ist es nicht notwendig, nur ein einziges beschalltes zentrales Bohrloch zu verwenden, sondern die beschriebene Anordnung kann dann in beliebiger Art vervielfacht werden. Auch hier würden dann jeweils einem zentralen mit Schalldruck beschallten Bohrloch periphere Druckschächte zugeordnet werden, über die Druckwasser und/oder Druckluft eingeführt wird.

In Erweiterung dieses Anwendungsbeispiels ist es ferner vorgesehen, daß statt der zentralen Anordnung eines beschallten Entnahmebohrloches z.B. 2 Bohrlöcher vorhanden sind, die in den Brennpunkten einer Ellipse angeordnet sind, wobei auf dem Ellipsenumfang selbst dann die Druckschächte zur Druckzuführung von Wasser und/oder Luft angeordnet wären.

Wenn man die Idee der Ellipse weiter geometrisch verzerrt, kommt man zu einer Grabenanordnung.

Eine derartige Grabenanordnung besteht darin, daß man im Bereich eines in den Erdboden eingegrabenen linearen oder gekurvten Grabens, in dem gleichmässig verteilt Schallsender angeordnet sind, zwischen welchen Schallsendern die Druckstutzen oder Bohrungen für die Zuführung von Luft/oder Wasser angeordnet sind.

Um auch in diesem Graben eine genügende Schallintensität auf das umgebende Erdreich zu erreichen, ist es vorgesehen, daß hier die Schallgeber als z.B. plattenförmige Elemente ausgebildet sind, deren bevorzugte Schallausbreitung in die Wände des Grabens gerichtet ist.

Hinsichtlich der Tiefe sämtlicher beschriebener Schächte wird folgendes erläutert:

Es wird bevorzugt, wenn die Druckschächte und auch der Entnahmeschacht bis in das Grundwasser reichen, weil im Grundwasser eine besonders günstige Schallausbreitung ist.

Eine derartige Tiefe ist jedoch nicht zwangsläufig notwendig, denn es reicht durchaus aus, bei tiefen Grundwasserspiegeln nicht bis zum Grundwasserspiegel zu graben oder zu bohren, sondern den oder die Schallgeber in Berührungskontakt mit der Bodenformation (Grabenwand oder Schachtwand) zu bringen.

In einer weiteren Ausführungsform ist es sogar vorgesehen, die Schallgeber auf der ebenen Oberfläche anzuordnen, wobei dann allerdings die Eindringtiefe begrenzt ist. Eine derartige Anordnung wird nur bei oberflächlich verseuchten Bodenformationen verwendet werden.

Ebenso ist es nicht lösungsnotwendig, daß der Schacht, über den die Beschallung der Bodenformation stattfindet, notwendigerweise die gleiche Tiefe hat, wie die Schächte, über welche Druckwasser oder Druckluft zugeführt wird.

Insbesondere wird in diesem Zusammenhang noch eine weitere Ausführungsform der vorliegenden Erfindung erwähnt, die ebenfalls vom Schutzgedanken Gebrauch macht.

Bei dieser Ausführungsform wird wiederum von der oben beschriebenen Verteilung eines oder mehreren beschallten Schachtes oder Grabens ausgegangen, um den peripher mehrere Druckwasserschächte oder Gräben angeordneten, in welche Druckwasser in die verseuchte Bodenformation eingepumpt wird.

Im Abstand von diesen Druckwasserschächten können Druckluftschächte angeordnet sein, die bevorzugt in gleichmässigem Abstand zu dem mittleren zentralen beschallten Entnahmeschacht angeordnet sind.

Über diese Druckluftschächte kann in einer ersten Ausführungsform Druckluft zugeführt werden, welche dann an dem mittleren zentralen beschallten Schacht wieder entnommen wird oder es kann im Gegensatz hierzu Luft abgesaugt werden, die entsprechend mit gasförmigen Schadstoffen verunreinigt ist und dann oberhalb der verseuchten Bodenformation gereinigt wird.

Dieselbe Anordnung kann auch bei einem linearen oder gekurvten Graben vorliegen, d.h. in der direkten Nachbarschaft des Grabens, der mit entsprechenden Schallgebern beschallt wird. Es sind außerhalb des Grabens Druckwasserschächte angeordnet, über die Druckwasser in die verseuchte Bodenformation eingepumpt wird und an anderer Stelle sind Stutzen oder Schächte im Erdboden angeordnet, über die entweder Druckluft in den Erdboden eingeführt oder aus diesem Gas aus dem verseuchten Erdboden abgesaugt wird.

Im folgenden wird erläutert, welche Mechanismen bei der Beschallung des Bodens zwecks Reinigung dieses Bodens stattfinden.

### Anwendungssituation

Bodenverunreinigungen, verursacht durch das Eindringen von LHKW und anderen leichtflüchtigen Stoffen in wassergesättigte Bodenzonen, sind herkömmlicherweise lediglich durch langfristiges Abpumpen des als Folge verunreinigten Grundwassers beizukommen (Stripping).

Da die LHKW (leicht flüchtige Halogen-Kohlenwasserstoffe) eine höhere Dichte als Wasser besitzen, und zudem schlecht löslich sind, sammeln sich hohe Konzentrationen dieser Stoffe, auch in flüssiger Phase, vor allem in Vertiefungen der in der Regel nicht ebenen Grundwassersohle. Geringere Grundwasserströmungsgeschwindigkeiten in dieser Zone verzögern den Austrag der LHKW. Selbst nach dem Austrag der Hauptmenge einer Verunreinigung, verbleibt eine hartnäckige, nur über längere Zeiträume zu beseitigende Residualsättigung, vor allem in den kleinen Poren, z.B. in Tonlagen.

Die Bodenbeschallung ermöglicht eine erhebliche Beschleunigung der Ausbringung der LHKW und anderer leichtflüchtiger Stoffe und trägt so zu einer Verkürzung des Sanierungszeitraumes und deren Kosten bei.

### Zweck und Wirken des Bodenbeschallers

Der Bodenbeschaller erfüllt eine Doppelaufgabe:
1. Die Energie des sich ausbreitenden Schalls verursacht eine Relativbewegung zwischen Bodenskelett und den darin enthaltenen Flüssigkeiten. Phasengrenzen der Flüssigkeiten erfahren so eine Vergrößerung ihrer im Gleichgewichtsfall vorhandenen gemeinsamen Oberflächen. Bei gleichbleibender Löslichkeitsrate kann aufgrund der größeren zur Verfügung stehenden gemeinsamen Oberfläche mehr LHKW pro Zeiteinheit im Wasser gelöst und anschließend im herkömmlichen Stripping-Verfahren ausgetragen werden.
2. Bereits im Wasser gelöste LHWK werden mittels Schallwellen ausgelöste Pseudo-Kavitation zum Entgasen gebracht. Die dabei entstehenden Bläschen können mit dem Wasser gefördert, bzw. nach deren Aufstieg in die teil- bzw. ungesättigte Bodenzone, über die Bodenluft abgesaugt werden.

### Einsatz des Bodenbeschallers

### Einbau

Dem Einsatz des Bodenbeschallers geht eine grundsätzliche Erkundung des Ausmasses und vor allem der Verteilung der Schadstoffkonzentration im Boden voraus. Es sollte bekannt sein, inwieweit das Grundwasser betroffen ist, ferner Grundwasserfliessrichtung, -geschwindigkeit, K_{f,} und ob nennenswerte LHKW Konzentrationen in der ungesättigten Bodenzone vorhanden sind.

Abgestimmt auf die örtlichen geologischen und hydrologischen Verhältnisse, wird im Verunreinigungsschwerpunkt eine Bohrung niedergebracht, deren Teufe der Eindringtiefe der LHKW entsprechen soll.

Die Verteilung der LHWK wird einerseits von den örtlichen Durchlässigkeitsanisotropien (Klüfte, Poren) gesteuert, andererseits von den hydrogeologischen Verhältnissen bestimmt sein. Der Schallgeber wird in das Niveau der höchsten LHWK Konzentration in der Bohrung abgesenkt. Der durch das aus der Bohrung geförderte Wasser sich ausbildende Absenkungstrichter sollte im Abstrom mindestens den Schadensherd abdecken. Entsprechend dem Wirkradius und der Abstrahlcharakteristik des Schallgebers, wird dieser orientiert eingebaut, damit größte Signalstärke und der Ort maximaler LHWK Konzentration zur Deckung gebracht werden. Gegebenenfalls müssen verschiedene Horizonte (von unten nach oben oder von oben nach unten) getrennt beschallt werden.

Sind mehrere Schadensherde vorhanden, so müssen in Abhängigkeit ihrer Entfernung voneinander eine entsprechende Anzahl von Schallgebern eingebaut werden. Ein im Pulsgenerator eingebaut Puls-Timer steuert jeden Schallgeber dann einzeln an.

### Wirkung der Schallreinigung

Die durch die Aktivierung des Schallgebers sich ausbreitenden Schallwellen zerstören das dynamische Gleichgewicht zwischen Grundwasser und LHWK Verunreinigung. Da das System Bodenwasser-LHKW (in der gesättigten Zone) für die gegebene Geologie und Schallgeberfrequenz ein neues Gleichgewicht anstreben wird, ist es auch im Sinne einer Energieersparnis zweckmässig, die Beschallung auszusetzen, ehe sich dieses neue Gleichgewicht einstellt. Zu diesem Zweck wird das Ein- und Ausschalen des Schallgebers mittels Puls-Timer den örtlichen Gegebenheiten entsprechend geregelt.

### Kenngrößen

Signalstärke am Schallgeber: = 100%
Entfernung 50% der Ausgangssignalstärke: 3 bis 8 Meter, abhängig von der Art des Bodens.
Effektive Wirkradius- axial zur Spule im Grundwasser: bis 10 m
axial zur Spule in der Bodenluft: bis 5 m,
abhängig von Boden- und Ankopplungsart.
Optimale Pulsrate: ca. 50 pro Sekunde
Dauer eines Beschallungszyklusses: 10 bis 60 Minuten

Aus dem Boden entfernt können alle in Wasser löslichen oder mindestens teilweise löslichen Giftstoffe, wie z.B. leichtflüchtige Hallogen-Kohlenwasserstoffe, Benzol, Benzin, Lösungsmittel, wie z.B. Perchloräthylen, Tenside, Fette, und Gase oder Stoffe, die sowohl sich in Wasser lösen als auch gasförmig vorkommen, wie alle leichtflüchtigen Chemikalien.

Der Reinigungsmechanismus beruht darauf, daß die Energie des sich ausbreitenden Schalls eine Relativbewegung zwischen dem Bodenskelett und den darin enthaltenen Flüssigkeiten auslöst. Die Phasengrenze der Flüssigkeiten erfahren so eine Vergrößerung ihrer im Gleichgewichtsfall vorhandenen gemeinsamen Oberflächen.

Damit ist gemeint, daß wenn sich ein als Flüssigtropfen vorhandener Giftstoff in einem kornmässig vorhandenen Bodenskelett befindet, daß dann durch die Beschallung dieses Gifttröpfchens dieses sich leichter in dem umgebenden Wasser im Boden löst, weil durch die Beschallung die Oberflächenspannung herabgesetzt wird und dieses Gifttröpfchen teilweise in Lösung mit dem umgebenden Wasser übergeht.
Im übrigen entstehen dabei auch gasförmige Anteile aus dem schon gelösten Anteil im umgebenden Wasser und das umgebende Wasser wird mit dem erfindungsgemässen Verfahren ständig abgesaugt und gereinigt.

Ein weiterer Erklärungsmechanismus besteht in der unterschiedlichen Polarität vieler Giftstoffe im Wasser.

Es bestehen nämlich sogenannte Helmholtz-Potentiale an den Oberflächen der Bodenkörner (Bodenskelett-Formationen) und durch die Beschallung entsteht eine Relativ-Bewegung zwischen der Flüssigkeit im Boden und im Feststoff, der die erwähnten Helmholtz-Potentiale aufweist.

Aufgrund dieser Helmholtz-Potentiale werden die Flüssigkeiten zunächst an den Bodenformationen festgebunden.

Erst durch die Beschallung entsteht eine Relativ-Bewegung zwischen den Flüssigkeitströpfchen und den Bodenformationen, wodurch die an den Bodenformationen haftenden Flüssigkeitströpfchen abgerissen werden und dann mit dem umgebenden Wasser abgesaugt werden.

Die Wandlung des gelösten Schadstoffes in förderbare Gasbläschen durch Pseudo-Kavitation wird durch die Beschallung vervielfacht bis um den Faktor 100 vergrößert.

### 1. Funktionsbeschreibung

Die gesamte Anlage wird als Rüttler bezeichnet. Diese besteht aus zwei Einbauschränken, mit Speisung und Steuerung, sowie dem Schallgeber.

Der Schallgeber besteht aus einer Spule, die durch Verschraubung zwischen zwei Alu-Platten fest eingeklemmt wird. Die Alu-Platten bilden außen den Trägerrahmen und durch Verjüngung im mittleren Teil jeweils eine Membran, deren Funktion mit jener eines Lautsprechers vergleichbar ist.

Die Spule wird mit Stromstössen von einigen bis 1000 A und der Dauer von 500 µs bis 1 ms angeregt.

Der Stromstoss wird durch das Entladen eines Kondensators über einen Thyristor erzeugt. Dieser Kondensator wird mittels LC-Schwingkreis wieder aufgeladen. Die Kondensatorspannung kann durch Verändern der speisenden Gleichspannung variiert werden. Die Gleichspannung wird über Stelltransformator, Transformator, Gleichrichter (alle drei Phasen) und Stützkondensator erzeugt. Die Stromstösse können einzeln ausgelöst werden oder im automatischen Betrieb. Im automatischen Betrieb kann die Repetierfrequenz zwischen 1 ...50 Hz gewählt werden.

Die ganze Anlage dient zur Reinigung verschmutzten Erdreiches. Mit den Schallwellen sollen Schmutzpartikel (Gase) aus dem Erdreich gelöst und über einen Wasserkreislauf herausfiltriert werden.

Die Leistungsaufnahme beträgt ca. 7 kW, die abgegebene 5 kW. Das heisst, daß 5 kW elektrische Leistung an den Schallgeber abgegeben wird.

### 2. Inbetriebnahme

Die Anlage wird mit einem 3-Phasen-Netz (inklusive Null und Erde) gespiesen. Die Anschlußleistung soll für 10 kW ausgelegt sein. (380 V/15 A pro Phase). Die Spannung für die Steuerung (220 V) wird intern von einer Phase zu Null abgegriffen. Das Speisekabel (1,5 mm²; 5-polig) wird an der Klemme K1 im Schrank I festgeschraubt.

### Einschalten

Mit einem Schalter wird das Netz (220 V) eingeschaltet. Dadurch wird erst die Möglichkeit gegeben, den Starkstromkreis zu aktivieren. Zugleich wird die Logik eingeschaltet und ist somit betriebsbereit.

Mit einer Taste wird der Starkstromkreis ein-, bzw. mit einer anderen Taste ausgeschaltet.

### Repetierfrequenzeinstellung

Hier bestehen zwei Möglichkeiten: eine automatische oder eine manuelle Auslösung der Stromstösse. Mit einem Schalter kann zwischen diesen Varianten gewählt werden.
Schalterstellung oben: manueller Betrieb
Schalterstellung unten:automatischer Betrieb
Die Repetierfrequenz kann mit einem Potmeter eingestellt werden. Drehen im Uhrzeigersinn bewirkt eine Frequenzerhöhung. Mit den Messbuchsen kann die Frequenz mit einem Kathodenstrahl Oszilloscope (K0) kontrolliert werden.

### Fehler

Bei einer Fehlfunktion schaltet der Starkstromkreis automatisch aus und eine rote LED leuchtet. Folgende Punkte könnten die Ursache für eine Fehlfunktion sein:
1. Die interne Spannungsüberwachung zeigt, daß nach dem Einschalten des Starkstromkreises keine Gleichspannung aufgebaut wird.
2. Die interne Stromüberwachung zeigt entweder, daß der Stromimpuls zu hoch war oder der Strom nach einem Impuls nicht auf ein Minimum abgesunken ist.

### NOT-AUS

An beiden Schränken befindet sich je eine NOT-AUS-Taste. Diese Tasten sind in Serie-Schaltung und bewirken eine Abschaltung des Starkstromkreises. Nach dem Gebrauch müssen sie durch Drehen entriegelt werden. Die Anlage kann mit einer Taste wieder eingeschaltet werden.

### PULSGENERATOR, Schallsender (Transducer)

Grundsätzlich wird die Kraftwirkung zwischen zwei parallelen Stromleitern angewendet. Dabei ist vor allem, aber nicht ausschließlich, die Abstossung zweier stromdurchflossener Leiter z.B. aus Kupfer von Bedeutung.

Nach dem Ampere'schen Gesetz gilt im Vakuum die Kraft K:
K is 2*10⁻⁷*l*i²/r (Newton)
mit
l = Leiterlänge,
K = Leiterabstand,
i = Strom,
* = Multiplikationszeichen

Um eine große Wirkung im Boden/Gestein zu erzeugen, sind hohe Drücke und große Volumenverdrängung (volume displacement) erforderlich. Die Kraftwirkung ist dem Quadrat des Abstandes der einzelnen Leiter umgekehrt proportional. Große Kräfte sind also nur über einen kleinen Weg verfügbar. Um trotzdem ein ausreichendes Volumen zu bewegen, sind große Flächen zu aktivieren. Ferner sollen die bewegten Massen klein sein, damit Schwingungsfrequenzen von einigen Kilo-Hertz erzeugt werden können.

Eine zweckmässige Gestaltung des Schallsenders ergibt sich als plattenförmige Membrane aus Metall, die durch eine leitfähige Flachspule mit hohen Stromstärken angeregt wird. Zur Vermeidung von Reaktionskräften auf die spule wirkt die Spule beidseitig auf zwei symmetrisch angeordnete Membranen.

Die Form der Anordnung (des Sandwich) Membran 1 - Spule - Membran 2 kann dem verfügbaren Raum angepasst werden, als plane Fläche oder gebogen als Zylindermantel oder als Zylindermantelsegment. Auch parabolische Formen zur Schall-Fokussierung haben sich bewährt.

Für die Konstruktion der Spule ist es wichtig, daß sie flach ist, einen großen Durchmesser und möglichst viele Windungen per Flächeneinheit hat. Die gewünschten Pulsfrequenzen und hohen Stromstärken bedingen einen kleinen elektrischen Widerstand. Am besten eignen sich Kupferbänder von z.B. 20 x 0,5 mm zu einer einlagigen Spule von einigen Dezimetern Durchmesser gewickelt.

Zwei prinzipiell verschiedene Effekte bewirken die Abstossung oder Anziehung der Membran.
- (x): Die Membran ist elektrisch gut leitend und leicht z.B. aus Aluminium, und ist einige Millimeter dick. Sie kann zur Anpassung der Eigenfrequenz konisch, plan oder wellenförmig geformt sein. Wird ein Stromstoss von mehreren 100 bis über 1000 Ampere durch die Spule geschickt, so wird in der leitenden Membran ein Gegenstrom induziert, der eine Funktion der Stromänderung mit der Zeit (di/dt) ist. Beide Membranen werden zunächst nach außen beschleunigt und beim Zusammenbruch des elektromagnetischen Feldes wieder einwärts gezogen.
- (y): Führt man Ferromagnetika in das System Spule/Membran ein, so wird die Spule mit dem ferromagnetischen Material und den Membranen verzahnt konstruiert.
- (y1): Wird die Membran aus Ferroplastik gefertigt und werden die benachbarten Stromleiter jeweils gegenpolig geschaltet, werden in den zwischen den Stromleitern gelegenen Rippen aus ferromagnetischem Material entgegengesetzte magnetische Pole erzeugt, die die Membranen auseinander treiben.
- _{(y2}): Bei der Verwendung von Eisen kombinieren sich die Effekte (x) und (y1).

Eine gute akustische Energieübertragung vom Schallsender in das eine Bohrung umgebende Gestein (Boden, Fels) ist bei ausreichender Tiefe durch das Grundwasser gegeben. In einer trockenen Bohrung (Brunnen) gewähren sich öl- oder wassergefüllte Kissen oder Packer, die an die Brunnenwand angepresst werden.

Ist der Schallsender als Zylindersegment geformt, kann er auch direkt an die Bohrlochwandung angepasst werden.

Der Wirkungsgrad der Bodenbeschallung wird durch die Schallfrequenz und die Repetierfrequenz der Einzelpulse (bursts) stark beeinflusst. Abhängig von der Boden- oder Gesteinsart und z.B. der Körnung werden die Frequenzen gewählt:
Schallfrequenz 100 bis 3000 Hertz
Repetierfrequenz 1 bis 100 Hertz (Bild 4)
= Abstand der Pulmaxima (Wiederholung der Einzelpulse)

Während der Bodenbeschallung wird aus der beschallten oder einer benachbarten Bohrung Grundwasser und/oder Bodenluft abgesaugt, um die mobilisierten Schadstoffe zu entfernen. Abhängig von der Durchlässigkeit des Bodens und entsprechend der Fördermenge wird der Schallsender periodisch abgeschaltet.

Es ergibt sich eine empirisch zu bestimmende Folge von Schall- und Totzeiten, die automatisch über einen Zeitschalter geregelt werden. Während der Totzeit für einen Sender kann von dem gleichen Pulsgenerator ein zweiter oder abwechselnd mehrere Sender aktiviert werden.

Ausführungsformen
- (x): - plan
- zylindrisch oder fokus
- (y): - plan
spiral-förmig
konzentrisch, parallel
- zylindrisch
spiral-förmig
konzentrisch, parallel

Im folgenden wird die Erfindung anhand von mehreren Ausführungswege darstellenden Zeichnungen näher erläutert. Hierbei gehen aus den Zeichnungen und ihrer Beschreibung weitere erfindungswesentliche Merkmale und Vorteile der Erfindung hervor.
- Figur 1: zeigt schematisiert ein Bohrloch mit Beschallungsgerät,
- Figur 1a: das gleiche Bohrloch nach Figur 1 mit einem um 90° gedrehten Beschallungsgerät,
- Figur 1b: zeigt eine andere Ausführungsform des Beschallungsgebers als Axialschwinger,
- Figur 2a: zeigt eine Wandankopplung eines Schallgebers nach einem der vorhergehenden Ausführungsbeispiele durch einen aufblasbaren Balg,
- Figur 2b: zeigt eine gegenüber Figur 2 abgewandelte Ausführungsform mit einer Wandankopplung durch Druckarme,
- Figur 3: zeigt einen Querschnitt durch eine Ausführungsform eines Schallgebers mit Spiral-Spulen,
- Figur 4: zeigt die Wellenform der Schallpulse, wie sie mit einem Schallgeber nach der Erfindung erzeugt werden,
- Figur 4a: zeigt den Zeitverlauf der Beschallung über eine größere Zeit hinweg gesehen,
- Figur 5: zeigt den Querschnitt durch einen Schallgeber in einer gegenüber Figur 3 abgewandelten Ausführungsform,
- Figur 6: zeigt eine weitere Ausführungsform eines Schallgebers,
- Figur 7a: zeigt ein Wicklungsmuster für eine Spiralspule für einen Schallgeber nach Figur 3,
- Figur 7b: zeigt ein Wicklungsmuster für eine bifilare Spule für einen Schallgeber nach Figur 5,
- Figur 7c: zeigt ein Wicklungsmuster für eine Spule mit Parallel-Kamm entsprechend dem Querschnitt für einen Schallgeber nach Figur 6,
- Figur 8: zeigt eine weitere Ausführungsform eines Schallgebers in Zylinderform mit einer Kammspule gemäss Figur 7c.

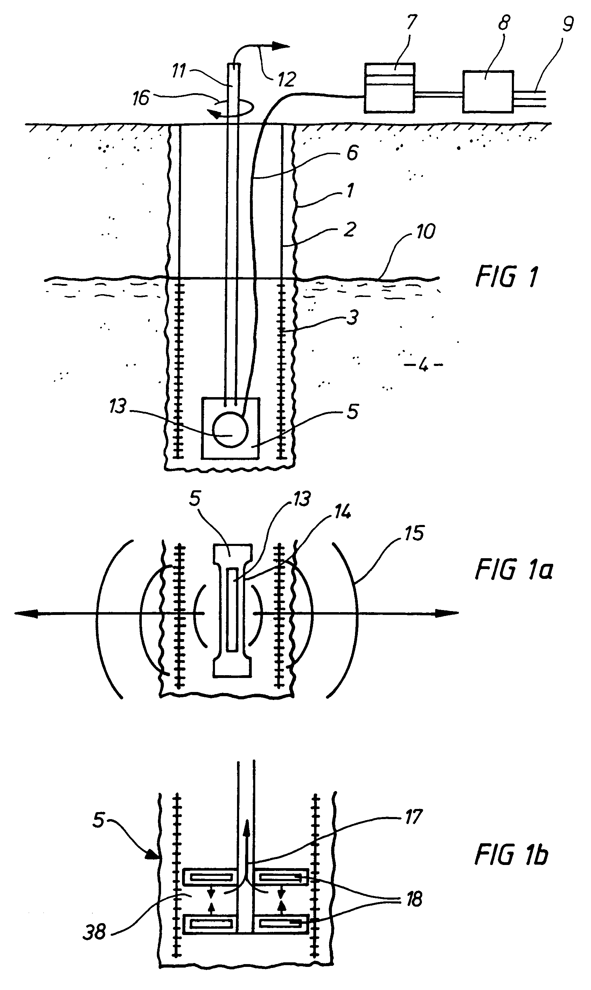

In Figur 1 ist eine Bohrung 1 als vertikaler Schacht dargestellt. Die Schachtsohle befindet sich bevorzugt unterhalb des Grundwasserspiegels 10.

Der Schacht ist mit einer Verrohrung 2 ausgekleidet, die in ihrem Grundwasserbereich als Filterrohr 3 ausgebildet ist. Nur durch die Ausbildung als Filterrohr 3 ist es möglich, im Bereich dieses Filterrohres 3 entsprechend abzusaugen.

Hierzu ist beispielsweise vorgesehen, daß über das Bohrgestänge 11 die Absaugung erfolgt, wobei am unteren freien Ende der Schallgeber 5 angeordnet ist, dessen energieabgebendes Teil (hier als Spule 13) über ein Kabel 6 mit einem Pulsgenerator 7 verbunden ist. Dieser ist an eine Speisung 8 angeschlossen, die über einen Netzgenerator gespeist wird.

In einer bevorzugten Ausführungsform der vorliegenden Erfindung ist vorgesehen, daß der Schallgeber 5 drehbar in der Bohrung 1 angeordnet ist. Hierzu kann vorgesehen sein, daß das Bohrgestänge 11 selbst drehbar ausgebildet ist. Lediglich schematisch ist dargestellt, daß am Bohrgestänge 11 eine Drehvorrichtung 16 ansetzt.

Über das Bohrgestänge 11 wird somit ständig Grundwasser aus der Bohrung 1 über den Pumpenanschluß 12 abgesaugt.

Das Filterrohr 3 wird vor allem bei lockeren Böden in die Bohrung 1 eingebaut, um die Formation im Grundwasserbereich stabil zu halten, um eine Verstopfung der Pumpe zu vermeiden.

Der Schallgeber 5 strahlt nun mit hoher Schallenergie bevorzugt in einander gegenüberliegenden Richtungen (wegen der höheren Energieabgabe) in die Bohrung 1 und damit in die Erdformation ein.

Es wurde im allgemeinen Beschreibungsteil ausgeführt, daß es nicht unbedingt lösungsnotwendig ist, daß die gesamte Anordnung unterhalb des Grundwasserspiegels 10 angeordnet ist. Wenn sie jedoch im Grundwasserspiegel unterhalb des Grundwasserspiegels 10 angeordnet ist, wird eine bessere Beschallung der verseuchten Formation erreicht.

Die Beschallung im Grundwasserbereich pflanzt sich über eine große Entfernung je nach eingebrachter Sendeleistung fort.

Bei der in der allgemeinen Beschreibung angegebenen Sendeleistung wurden physikalisch-chemische Wirkungen in der Erdformation bis in einen Bereich von 5 m vom Schallgeber entfernt erreicht.

Wenn man den Schallgeber 5 - wie in Figur 1 dargestellt - unterhalb des Grundwasserspiegels 10 betreibt, können entsprechende Druckwasserschächte, die in der Peripherie zu der Bohrung 1 nach Figur 1 angeordnet sind, entfallen. Es strömt nämlich auch ohne Druckwasserzuführung entsprechendes Grundwasser nach, so daß ein stetiger Strom von Grundwasser durch die zu reinigende Formation gewährleistet ist.

Erst wenn ohne Grundwasser gearbeitet wird, wird die künstliche Zuführung von Druckwasser in der Peripherie der nach Figur 1 gezeigten Bohrung 1 bevorzugt.

Ebenso ist in Figur 1 nicht dargestellt, daß zusätzlich noch entweder eine Druckluftzuführung in der Peripherie der Bohrung 1 stattfinden kann, oder eine Gasentnahme ebenfalls in der Peripherie dieser Bohrung 1.

Hierbei wird es bevorzugt, wenn die Druckwasserzuführung und die Gasentnahme im Wirkungsbereich des Schallgebers liegt, weil dann bessere Reinigungswirkungen erzielt werden. Diese Anordnung ist jedoch nicht zwingend und lösungsnotwendig, wird aber bei der vorliegenden Erfindung bevorzugt.

Während des Betriebs des Schallgebers 5 nach Figur 1 wird dieser über die Drehung des Bohrgestänges 11 und den Drehantrieb 16 ständig gedreht, um eine gleichmässige Beschallung im Bereich der gesamten Bohrung zu erreichen.

Zusätzlich kann es vorgesehen sein, daß der Schallgeber noch entlang des Bohrgestänges oder zusammen mit dem Bohrgestänge axial in der Bohrung bewegbar ist, um auch die Bohrung in der Längserstreckung zu beschallen.

In der Figur 1a ist der gleiche Schallgeber 5, wie in Figur 1 in um 90° gedrehter Darstellung gezeigt.

Der Schallgeber besteht hierbei im wesentlichen aus zwei plattenförmigen Elementen, nämlich den Membranen 14, zwischen denen eine Spule 13 angeordnet ist. Auf diese Weise werden senkrecht zu den gegenüberliegenden Membranen 14 die Schallwellen 15 in die Erdformation eingeleitet.

Lediglich aus technischen Gründen wird ein direkter bidirektionaler Schallgeber bevorzugt, weil hier besonders hohe Schalldichten in der umgebenden Erdformation erreicht werden. Es ist selbstverständlich auch möglich, sphärische schallwellenabgebende Schallgeber zu verwenden, wenn eine genügend hohe Schalldichte in der Erdformation erreicht wird.

Es würde sich hierbei dann um einen kugelförmigen Schallgeber handeln.

Ebenso sind zylinderförmige Schallgeber möglich. In der Figur 1b ist eine weitere Ausführungsform eines Schallgebers dargestellt, wo insgesamt zwei Schallgeber in relativ großem Abstand einander gegenüber liegen und im Gegentakt arbeiten. Jeder Schallgeber 18 hat axiale Schallabgabe, so daß im Zwischenraum 38 zwischen den beiden Schallgebern 18 ein hoher Druck bzw. Vakuum stattfindet und das Grundwasser in diesem Bereich besonders hoch komprimiert und evakuiert wird.

Es entstehen somit Druckwellen in die Formation sowie Saugwellen aus der Formation heraus, wobei aus diesem Zwischenraum 38 das mit Verschmutzungen und Giftstoffen angereicherte Wasser in Richtung der Pfeilrichtung 17 über das Bohrgestänge 11 und die Absaugvorrichtung 12 entfernt wird.

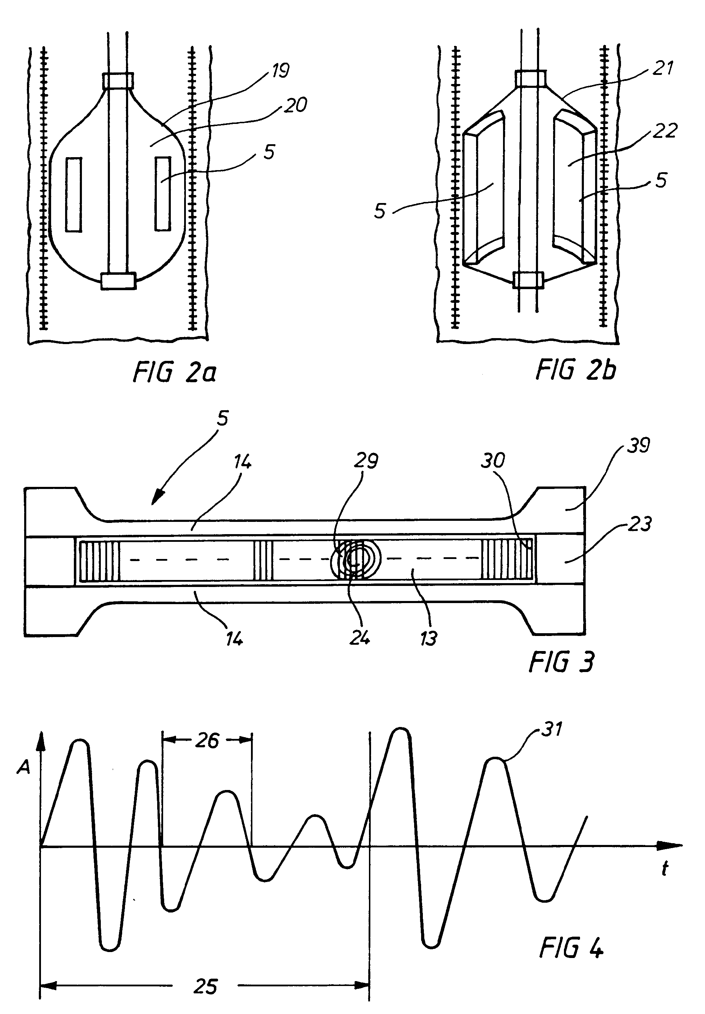

In den Figuren 2a und 2b sind verschiedene Ankopplungsmechanismen für die Ankopplung derartiger Schallwandler nach den Figuren 1 - 1b an die Bohrlochwandung gezeigt.

Hierbei ist erkennbar, daß ein oder mehrere Schallwandler 5 im Bereich eines Balges 19 angeordnet sind, welcher Balg 19 mit einer Druckflüssigkeit 20 gefüllt ist. Die Druckflüssigkeit hat beliebigen Druck, der ausreicht, den Balg 19 soweit zu expandieren, daß es sich kraft- und formschlüssig an der Innenseite des Filterrohres bzw. beim Fehlen des Filterrohres unmittelbar an der Formation anlegt.

Hierdurch wird eine ausgezeichnete Ankopplung an die Erdformation erreicht, so daß der Wirkungsgrad der Schallausbreitung verbessert werden kann.

Eine ähnliche Ausführung zeigt die Figur 2b, wo erkennbar ist, daß die Schallgeber 5 im Bereich von Zylindersegmenten 22 angeordnet sind, welche radial spreizbar über Federarme 21 an die Innenseite des Filterrohres 3 bzw. direkt an die Erdformation angedrückt werden. Die Ankopplung an die Erdformation bzw. das Filterrohr 3 erfolgt hier also unter der Kraft der Federarme 21.

Neben den hier beschriebenen Ankopplungsmechanismen sind auch alle anderen bekannten Ankopplungsmechanismen möglich, wie z.B. pneumatische oder hydraulische Kraftgeber, welche die entsprechenden Schallgeber 5 an die Bohrlochwandung anpressen.

In Figur 3 ist eine erste Ausführungsform eines Schallgebers 5 dargestellt.

Der Schallgeber 5 besteht hierbei aus einem flächenförmigen Gehäuse 39, welches im wesentlichen rahmenförmig ausgebildet ist und entweder quadratischen oder rechteckförmigen Grundriss aufweist.

Es handelt sich hierbei um zwei flächenförmige, einander gegenüberliegende und parallel zueinander angeordnete Rahmenteile 39, die zwischen sich einen gegenseitigen Abstand ausbilden. Im Bereich jedes Rahmenteils ist hierbei eine Membran 14 ausgebildet. Um die Membran 14 zu stabilisieren, sind die Außenkanten des Gehäuseteils verstärkt ausgebildet.

Im Zwischenraum zwischen den Gehäuseteilen 39 ist ein Spannrahmen 23 angeordnet. Der Spannrahmen ist im wesentlichen ein umlaufender, abdichtend in den Zwischenraum eingesetzter Abstandsstreifen, der den Zwischenraum zwischen den Gehäuseplatten 39 vollständig abdichtet.

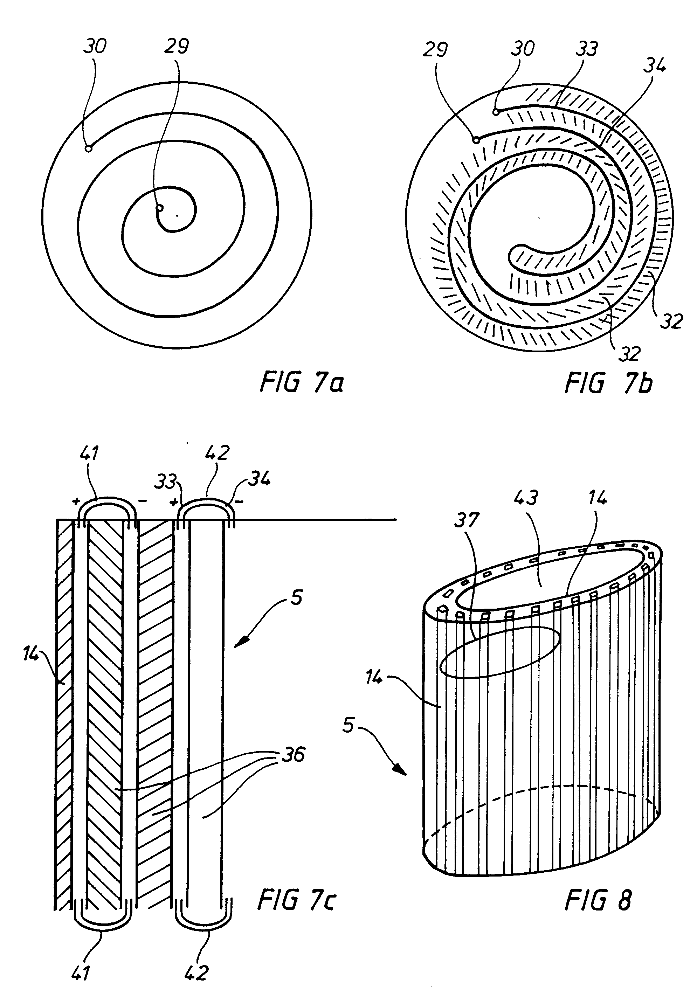

In diesem Zwischenraum ist eine einzige Spirale angeordnet, wie sie in den Figuren 7a und 7b dargestellt ist. Diese Spirale enthält ein einziges Kupferband 24, welches über einen Plus-Anschluß 29 bzw. einen Minus-Anschluß 30 (vergl. Figur 7a) mit entsprechendem Strom versorgt wird.

Lediglich aus Dimensionierungsgründen (wegen der hohen Ströme) wird eine derartige Kupferspirale verwendet.

Die Figur 3 zeigt einen Schnitt durch eine derartige Spirale, wobei die Kupferbänder 24 im Schnitt dargestellt sind.

Die Spule 13 ist also im vorliegenden Ausführungsbeispiel als Spiralspule ausgebildet. Es ist selbstverständlich in einer Abwandlung der vorliegenden Erfindung möglich, statt der hier verwendeten Kupferbänder 24 auch zylindrische oder mit anderem Querschnitt ausgebildete Wicklungsdrähte zu verwenden.

Hierbei wird es bevorzugt, wenn die Höhe der Membran geringer ist als der Zwischenraum zwischen den Platten, der durch den Abstandshalter 23 definiert wird. Hierdurch wird ein Zwischenraum zwischen der Spirale und den darüber und darunter liegenden Membranen 14 erreicht.

Die Membranen 14 werden so zu Schwingen angeregt, die im Gegentakt zueinander schwingen.

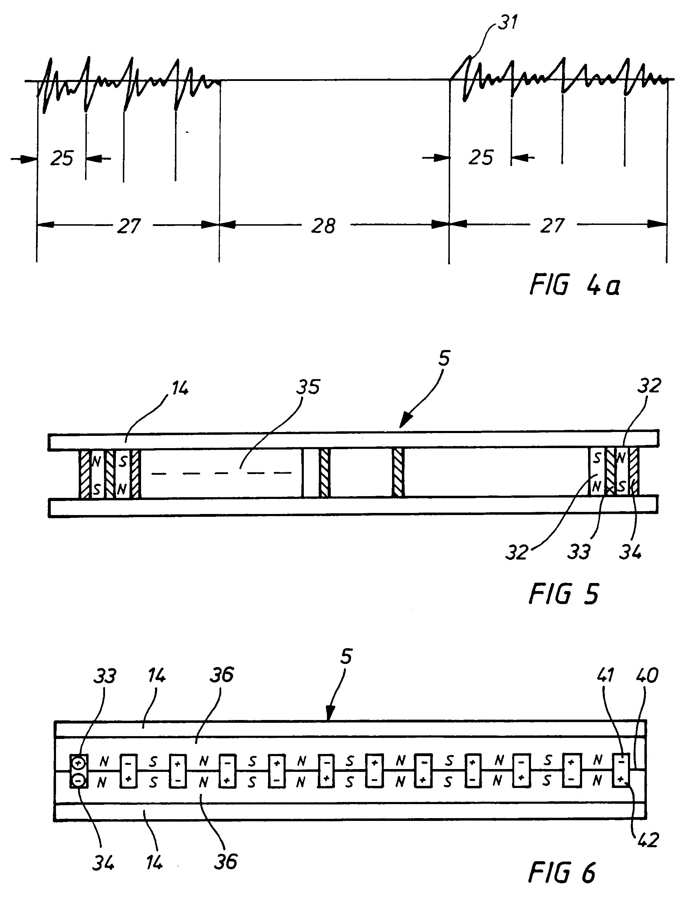

Die Figur 4 zeigt als Ausführungsbeispiel eine Frequenzkurve zur Anregung des Schallgebers 5 mit der Spiralspule nach den Figuren 3 bzw. 7a, 7b.

In der Figur 4 und in der Figur 4a ist die Amplitude der jeweiligen Membran 14 über die Zeit hinweg dargestellt. Die Figur 4 zeigt hierbei einen zeitlichen Ausschnitt aus der Figur 4a.

Die Schallwellenlänge 26 wird so bemessen, daß eine physikalisch-chemischer Reaktion in der beschallten Erdformation feststellbar ist. Versuche des Anmelders haben ergeben, daß derartige Schallwellen im Bereich von 100 Hz bis zu 10 KHz wirksam sind.

Aus Leistungsgründen wird hierbei eine pulweise Beschallung der Formation bevorzugt, wobei derartige Pulse im Bereich einer Repetitionszeit 25 in die Formation eingeleitet werden. Der Wellenzug 31 des gesendeten Schalls ist in Figur 4 dargestellt.

Die Figur 4a zeigt in größerem zeitlichen Abstand diese gepulsten Wellenzüge 31. Es ist erkennbar, daß im Bereich einer Repetitionszeit 25 pulsweise gesendet wird und dann eine Totzeit 28 angewendet wird, nach deren Ablauf das gleiche Wellenmuster wieder erzeugt wird.

Die Dauer der Totzeit richtet sich nach dem Energieverbrauch der Geräte und der Fördermenge des Wassers, wenn man eine bestimmte Zone beschallt Wenn man nämlich z.B. in einem wirksamen Bereich von 5 m die umgebende Erdformation gereinigt hat, muß man warten, bis aus der weiteren Umgebung verseuchtes Wasser in die Bohrung 1 nachgeströmt ist, um dies wieder aus der Bohrung 1 herauszufördern.

Hieraus ergibt sich eine verbesserte wirtschaftliche Anwendung des erfindungsgemässen Verfahrens.

Gleichzeitig kann man während der Totzeit eine andere Bohrung beschallen.

Die Schallzeit kann hierbei in der Größenordnung von 1/2 Stunde bis 1 Stunde liegen und die Totzeit einige Stunden betragen.

Die Zeiten 27,28 sind abhängig von der Permeabilität des Bodens sowie vom Grad der Verschmutzung abhängig.

In Figur 5 ist eine weitere Ausführungsform eines Schallgebers 5 gezeigt.

Der dortige Schallgeber besteht aus einer Bifilarspule 35, wobei ansonsten die gleichen Verhältnisse wie in Figur 3 gelten. Es ist wiederum abgedichtet in einem rahmenförmigen Gehäuseteil 39 einander gegenüberliegende und einen gegenseitigen Abstand zueinander einnehmende parallele Membrane 14 vorgesehen, wobei nur lediglich jetzt anstatt einer einfach spiralig gewickelten Spule gemäss Figur 7a eine bifilar gewickelte Spule 35 verwendet wird. Die Verwendung einer Bifilar-Spule 35 hat den Vorteil, daß eine andere Führung der Wirbelströme gewählt werden kann und im übrigen kann eine erhöhte Konzentration der Feldlinien durch die Anordnung von ferromagnetischen Bändern 32 am Außenumfang der Bifilar-Spule 35 erzeugt werden. Im radialen Abstand zu dem Ferromagnetband 32 ist ein Kupferband 33 als Plusleiter und im weiteren Abstand wiederum unter Zwischenschaltung eines Ferromagnetbandes 32 ist ein Kupferband 34 als Minusleiter angeordnet.

Die Kupferbänder 33,34 sind Teil der bifilaren Wicklung der Spule 35. Die Verhältnisse des Anschlußes dieser Spule sind in Figur 7b dargestellt.

Hierbei ist erkennbar, daß der eine Anschluß 29 sowie der andere Anschluß 30 beide aus der Spule radial herausgeführt sind und nicht - wie in Figur 7a - der eine Anschluß vom Zentrum der Spule aus nach außen geführt werden muß.

Ferner ist dargestellt, daß am Außenumfang der Bifilarspule 35 die besagten Ferromagnetbänder 32 angeordnet sind. Es handelt sich hierbei um ein durchgehendes, einheitliches Ferromagnetband, welches zusammen mit der bifilaren Spule 35 gewickelt ist. D.h. das Ferromagnetband erstreckt sich parallel und in Körperkontakt zu der Bifilarspule 35. Damit wird eine Verbesserung der Induktionswirkung der Spule 35 erreicht und ein verbesserter Wirkungsgrad auf die im Gegentakt schwingenden Membranen 14 gewährleistet.

Die Figur 6 zeigt eine weitere Ausführungsform eines Schallgebers, wobei bezüglich des Gehäuses die Erläuterungen der Figuren 3 und 5 gelten.

Bei den Figuren 1 bis 5 wurde hinsichtlich der Konstruktion auf eine hohe Induktion im Bereich der als Aluminiumplatten ausgebildeten Membranen 14 abgezielt.

In Figur 6 wird ein anderes Wirkungsprinzip bevorzugt:

Durch unabhängig voneinander angesteuerte Spulen im Ober- und Unterteil werden entgegengesetzte Magnetpole erzeugt, die sich also gegenseitig abstossen und somit ebenfalls eine Auslenkung der Platten (Membranen 14) erreichen.

Zu diesem Zweck sind also 2 übereinander liegende Schichten im Zwischenraum zwischen den Membranen 14 vorhanden. Es besteht eine Grenzschicht 40, wobei bezüglich dieser Grenzschicht die beiden Spulen genau identisch ausgebildet sind. Jede Spulenwicklung der einen Spule ist eine entsprechende Spulenwicklung der darunterliegenden anderen Spule zugeordnet. Wichtig ist, daß die Spulen entgegengesetzt gepolt sind, so daß die eine Spule mit dem Strom in der einen Richtung und die andere Spule mit dem Strom in der anderen Richtung durchflossen ist, so daß im Zwischenraum zwischen den einanderliegenden Spulenwicklungen jeweils gleichnamige Pole erzeugt werden, die sich abstossen. In der Figur 6 ist lediglich der Plusleiter als Kupferband 33 der einen Spule und der gleichnamige, jedoch entgegengesetzte Anschluß als Kupferband 34 der anderen darunterliegenden Spule dargestellt.

Die anderen Anschlüsse sind nicht dargestellt.

Beide Spulen können entweder gemäss Figur 7a als einfache Spiralen gewickelt werden oder gemäss Figur 7b als bifilar gewickelte Spulen.

Ebenso ist es möglich bei der Ausführungsform nach Figur 7b noch zusätzlich zur Verbesserung der Induktion ein Ferromagnetband zu verwenden, wie es mit dem Ferromagnetband 32 in Figur 5 erläutert wurde.

Auf diese Weise werden die einander gegenüberliegenden Membranen 14 wiederum im Gegentakt angetrieben, d.h. pro Schwingungszug kommt es zu einer entgegengesetzten Auseinanderbewegung der Membranen oder zu einer analogen Zueinanderbewegung der Membranen.

In den Figuren 7c und 8 ist dargestellt, daß die Wicklungsanordnung der hier gezeigten flach aufeinanderliegenden spiralig gewickelten Wicklungen auch auf einer Fläche angeordnet werden kann, wobei die Figur 7c eine reine gerade Mantelfläche zeigt, während Figur 8 zeigt, daß diese Spiralen auch im Bereich eines Zylindermantels angeordnet werden können.

Der besseren Übersichtlichkeit halber wurde die obere Spule in Figur 6 mit 41 und die untere Spule mit 42 bezeichnet.

Figur 7c zeigt nun, daß derartige Spulen 41,42 auf einer Fläche, nämlich im Bereich der Gehäusefläche der Gehäusehälften 39 flächig im gegenseitigen Abstand zueinander angeordnet werden können, wobei man in Figur 7c jeweils nur die obere Schicht der jeweiligen Spulen sieht, während in der darunter liegenden Zeichenebene der Figur 7c die jeweils entgegengesetzt gepolten Spulen 42/41 unter den Spulen 41/42 angeordnet sind.

Jede einzelne Spule kann hierbei insich geschlossen sein und getrennt von der Stromversorgung angetrieben sein oder in einer anderen Ausführungsform können die Spulen auch meanderförmig miteinander verbunden sein, d.h. das Wicklungsende der einen Spule 41 ist beispielsweise mit dem Wicklungsanfang der Spule 42 verbunden und so fort.

Zwischen den Spulen können entsprechende, die Induktion erhöhende Maßnahmen getroffen werden, wie z.B. ferromagnetische Kerne angeordnet sein oder die Abstände und Größen der Spulen verändert werden.

Es sind dies derartige ferromagnetische Kerne 36, die entweder mit ferromagnetischem Pulver angereicherte Kunststoffe sind oder Eisenkerne.

Figur 8 zeigt, daß derartige Spulenanordnungen mit schichtweise übereinander liegenden und gegensätzlich gepolten Spulen 41,42 auch im Bereich eines Zylindermantels angeordnet sein können.

Wenn man sich in Figur 7c die Flächenanordnung, wie beschrieben, auf einen Zylindermantel aufgewickelt vorstellt, erhält man die Abbildung nach Figur 8.

D.h. also , es ist eine innere Membrane 14 und eine äußere Membrane 14 vorhanden, die beide im Gegentakt angetrieben sind. In einer weiteren Ausführungsform ist vorgesehen, daß die innere Membran 14 durch einen Vollkern 43 am Schwingen gehindert wird, so daß die Schwingungserzeuger allein auf die äußere Membran 14 wirken und hierdurch eine verbesserte Schallabgabe gewährleistet ist.

Nach der vorliegenden Erfindung kommt es also darauf an, mit hoher elektrischer Leistung eine möglichst hohe Schalldichte in der zu reinigenden Erdformation zu erreichen. Hierzu sind die hier beschriebenen besonderen Schallgeber geeignet. Die Erfindung ist jedoch nicht nur auf die hier beschriebenen Schallgeber beschränkt, sondern umfasst alle Schallgeber, mit denen es möglich ist , eine hohe Schalldichte über eine entsprechende Ankopplung in eine Erdformation einzuleiten.

Neben den hier beschriebenen induktiven Schallgebern werden deshalb von der vorliegenden Erfindung auch hydraulische Schallgeber umfasst und mechanische Schallgeber, die z.B. über Exzenterantriebe oder Nockenwellenantriebe eine oszillierende Bewegung in die umgebende Erdformation einleiten.

Die Frequenz der Schallwellen wird so gewählt, daß ein physikalisch-chemischer Effekt in genügender Reichweite vom Schallgeber entfernt auf die zu beschallende Erdformation erzeugt wird.

## Patentansprüche

1. Verfahren zum Entfernen von Schadstoffen aus dem Boden, wobei Grundwasser mit samt den Schadstoffen abgepumpt und an der Bodenoberfläche gerreinigt wird und wobei das Grundwasser beschallt wird, **dadurch gekennzeichnet,** daß auch das Grundwasser führende Erdreich beschallt wird.

2. Verfahren nach Anspruch 1, **dadurch gekennzeichnet**, daß in den zu reinigenden Boden (4) im Bereich der vermuteten größten Verschmutzung ein vertikales Bohrloch (1) eingebracht wird, welches bis in den Grundwasserbereich (10) reicht.

3. Verfahren nach den Ansprüchen 1 und 2, **dadurch gekennzeichnet**, daß in radialem Abstand von einem zentrisch angebrachten Bohrloch (1) gleichmässig auf einem Kreis am Umfang verteilt weitere Bohrungen angeordnet werden, über welche Druckwasser eingeführt wird, welches über die mittlere, zentrale und beschallte Bohrung wieder entnommen wird.

4. Verfahren nach Anspruch 3, **dadurch gekennzeichnet**, daß statt Druckwasser Druckluft oder eine Kombination von Druckwasser und Druckluft verwendet wird.

5. Verfahren nach Anspruch 1, **dadurch gekennzeichnet**, daß statt der zentralen Anordnung eines beschallten Entnahmebohrlochs 1 zwei Bohrlöcher verwendet werden, die in den Brennpunkten einer Ellipse angeordnet sind, wobei auf dem Ellipsenumfang selbst die Druckschächte zur Druckzuführung von Wasser und/oder Luft angeordnet sind.

6. Verfahren nach Anspruch 1 , **dadurch gekennzeichnet**, daß die Bohrlöcher im Bereich eines in den Erdboden eingegrabenen, linearen oder gekurvten Grabens angeordnet sind, in dem gleichmässig verteilt Schallsender (5) als plattenförmige Elemente angeordnet sind und die Schallausbreitung der Schallsender (5) auf die Wände des Grabens gerichtet ist, wobei zwischen den Schallsendern (5) die Druckstützen oder Bohrungen für die Zuführung von Luft/oder Wasser angeordnet sind.

7. Verfahren nach Anspruch 1, **dadurch gekennzeichnet**, daß bei tiefen Grundwasserspiegeln und einer Bohrung , welche den Grundwasserspiegel nicht erreicht, die Schallgeber (5) in Berührungskontakt mit der Bodenformation (Grabenwand oder Schachtwand) gebracht werden.

8. Verfahren nach Anspruch 1, **dadurch gekennzeichnet,** daß bei oberflächlich verseuchten Bodenformationen die Schallgeber (5) auf der ebenen Oberfläche angeordnet sind.

9. Verfahren nach Anspruch 1, **dadurch gekennzeichnet,** daß bei einem oder mehreren beschallten Schächten oder bei einem Graben mit peripher angeordneten Druckwasserschächten zusätzlich Druckluftschächte vorgesehen sind, die in gleichmässigem Abstand zu dem mittleren, zentralen beschallten Entnahmeschacht (1) angeordnet sind.

10. Verfahren nach Anspruch 9, **dadurch gekennzeichnet**, daß über die Druckluftschächte Druckluft zugeführt wird, welche am mittleren, beschallten Schacht (1) wieder entnommen wird oder es wird über die Druckluftschächte Luft abgesaugt, die dann oberhalb der verseuchten Bodenformation von Schadstoffen gereinigt wird.

11. Vorrichtung zur Durchführung des Verfahrens nach einem der Ansprüche 1 bis 10, **dadurch gekennzeichnet**, daß ein Schacht (1) vorgesehen ist, welcher mit einem Filterrohr (3) ausgekleidet ist, wobei über das Bohrgestänge (11) die Absaugung erfolgt und am unteren freien Ende der Schallgeber (5) angeordnet ist, dessen energieabgebendes Teil (Spule 13) über ein Kabel (6) mit einem Pulsgenerator (7) verbunden ist.

12. Vorrichtung nach Anspruch 11, **dadurch gekennzeichnet**, daß der Schallgeber (5) drehbar über einen Drehantrieb (16) in der Bohrung (1) angeordnet ist.

13. Vorrichtung nach den Ansprüchen 11 bis 12, **dadurch gekennzeichnet**, daß der Schallgeber (5) zusätzlich noch axial in der Bohrung bewegbar ist, um die Bohrung auch in der Längserstreckung zu beschallen.

14. Vorrichtung nach Anspruch 11, **dadurch gekennzeichnet**, daß der Schallgeber aus zwei plattenförmigen Elementen nach Art von Membranen (14) besteht, zwischen denen eine Spule (13) angeordnet ist.

15. Vorrichtung nach Anspruch 11, **dadurch gekennzeichnet**, daß zwei axiale Schallgeber (18) in relativ großem Abstand einander gegenüberliegen und im Gegentakt arbeiten.

16. Vorrichtung nach Anspruch 11, **dadurch gekennzeichnet**, daß eine oder mehrere Schallwandler (5) im Bereich eines mit einer Druckflüssigkeit gefüllten Balges (19) angeordnet sind, wobei der Balg (19) kraft- und formschlüssig an der Innenseite des Filterrohres (3) anliegt.

17. Vorrichtung nach Anspruch 11, **dadurch gekennzeichnet**, daß die Schallgeber (5) im Bereich von Zylindersegmenten (22) angeordnet sind, welche radial spreizbar über Federarme (21) an der Innenseite des Filterrohres (3) bzw. direkt an die Erdformation angedrückt werden.

18. Vorrichtung nach Anspruch 11, **dadurch gekennzeichnet**, daß der Schallgeber (5) aus einer Bifilarspule (35) besteht, die in ihrer Schwingung auf eine Membran (14) wirkt.

19. Vorrichtung nach Anspruch 11, **dadurch gekennzeichnet**, daß der Schallgeber (5) aus unabhängig voneinander entgegengesetzt angesteuerten Spulen im Ober- und Unterteil besteht, wodurch über sich abstossende Magnetpole Membrane (14) zum Schwingen angeregt werden.

20. Vorrichtung nach Anspruch 11, **dadurch gekennzeichnet**, daß die Wicklungsanordnung der Magnetspulen auf einer Fläche angeordnet ist, wobei Schallgeber (5) mit einer geraden Mantelfläche bzw. Schallgeber (5) mit einem Zylindermantel vorgesehen sind.

## Claims

1. Method for removing contaminants from the soil, wherein groundwater is pumped out together with the contaminants and purified at the soil surface and wherein the groundwater is exposed to ultrasonic waves, characterised in that the earth which carries groundwater is also exposed to ultrasonic waves.

2. Method according to claim 1, characterised in that into the soil (4) to be purified, in the region of the supposed greatest contamination, is inserted a vertical borehole (1) which reaches as far as the groundwater zone (10).

3. Method according to claims 1 and 2, characterised in that at a radial distance from a centrally placed borehole (1), evenly distributed in a circle at the circumference, are arranged additional bores via which pressurised water is introduced, which is extracted again via the middle, central bore which is exposed to ultrasonic waves.

4. Method according to claim 3, characterised in that, instead of pressurised water, compressed air or a combination of pressurised water and compressed air is used.

5. Method according to claim 1, characterised in that, instead of the central arrangement of an extraction borehole (1) exposed to ultrasonic waves, two boreholes which are arranged at the focal points of an ellipse are used, wherein the pressure shafts for pressurised supply of water and/or air are arranged on the circumference of the ellipse itself.

6. Method according to claim 1, characterised in that the boreholes are arranged in the region of a linear or curved trench which is dug in the soil and in which sound emitters (5) are arranged as plate-like elements in even distribution and the sound propagation of the sound emitters (5) is directed onto the walls of the trench, wherein between the sound emitters (5) are arranged the discharge branches or bores for the supply of air and/or water.

7. Method according to claim 1, characterised in that in the case of deep groundwater levels and a bore which does not reach the groundwater level, the sound transmit- ters (5) are brought into contact with the soil formation (trench wall or shaft wall).

8. Method according to claim 1, characterised in that in the case of surface-contaminated soil formations, the sound transmitters (5) are arranged on the level surface.

9. Method according to claim 1, characterised in that in the case of one or more shafts exposed to ultrasonic waves or a trench with peripherally arranged pressurised water shafts, there are provided in addition compressed air shafts which are arranged at a uniform distance from the middle, central extraction shaft (1) exposed to ultrasonic waves.

10. Method according to claim 9, characterised in that compressed air is supplied through the compressed air shafts and extracted again at the middle shaft (1) exposed to ultrasonic waves, or air is exhausted via the compressed air shafts and then purified from contaminants above the contaminated soil formation.

11. Apparatus for carrying out the method according to any of claims 1 to 10, characterised in that there is provided a shaft (1) which is lined with a filter tube (3), wherein exhaustion takes place via the drill pipe (11) and at the lower free end is arranged the sound transmitter (5) of which the energy-emitting portion (coil 13) is ccnnected by a cable (6) to a pulse generator (7).

12. Apparatus according to claim 11, characterised in that the sound transmitter (5) is rotatably arranged on a rotary drive (16) in the bore (1).

13. Apparatus according to claims 11 to 12, characterised in that the sound transmitter (5) is in addition axially movable in the bore in order to expose the bore to ultrasonic waves in the longitudinal extent also.

14. Apparatus according to claim 11, characterised in that the sound transmitter consists of two plate-like elements after the fashion of diaphragms (14), between which is arranged a coil (13).

15. Apparatus according to claim 11, characterised in that two axial sound transmitters (18) are located opposite each other at a relatively long distance and operate with a push-pull action.

16. Apparatus according to claim 11, characterised in that one or more sound transducers (5) are arranged in the region of a pressurised fluid-filled bellows (19), wherein the bellows (19) abuts the inside of the filter tube (3) in force-locking and form-locking relationship.

17. Apparatus according to claim 11, characterised in that the sound transmitters (5) are arranged in the region of cylinder segments (22) which are biased radially apart by spring arms (21) against the inside of the filter tube (3) or directly against the soil formation.

18. Apparatus according to claim 11, characterised in that the sound transmitter (5) consists of a bifilar coil (35) which in its oscillation acts on a diaphragm (14).

19. Apparatus according to claim 11, characterised in that the sound transmitter (5) consists of coils in the upper and lower portions which are oppositely triggered independently of each other, whereby diaphragms (14) are caused to oscillate by magnetic poles which repel each other.

20. Apparatus according to claim 11, characterised in that the winding layout of the magnet coils is arranged on a surface, wherein sound transmitters (5) with a straight outer surface or sound transmitters (5) with a cylinder casing are provided.

## Revendications

1. Procédé pour éliminer des substances polluantes du sol, selon lequel les eaux souterraines sont pompées, avec lesdites substances polluantes, et purifiées à la surface du sol, et les eaux souterraines sont exposées à l'action des ultrasons, caractérisé en ce que le terrain dans lequel se trouvent les eaux souterraines est exposé lui aussi à l'action des ultrasons.

2. Procédé selon la revendication 1, caractérisé en ce qu'on réalise, dans le sol à purifier (4), dans la zone de la pollution maximale présumée, un forage vertical (1) qui va jusque dans la zone des eaux souterraines (10).

3. Procédé selon les revendications 1 et 2, caractérisé en ce qu'il est prévu, à une distance radiale d'un forage (1) réalisé de façon centrée, d'autres forages qui sont répartis régulièrement sur un cercle, à la périphérie, et par l'intermédiaire desquels on introduit de l'eau sous pression qui ressort par le forage central du milieu qui est exposé aux ultrasons.

4. Procédé selon la revendication 3, caractérisé en ce qu'on utilise, à la place de l'eau sous pression, de l'air comprimé ou une combinaison d'eau sous pression et d'air comprimé.

5. Procédé selon la revendication 1, caractérisé en ce qu'on utilise, à la place du forage central d'extraction 1 exposé aux ultrasons, deux forages qui sont disposés dans les foyers d'une ellipse, les puits de pression destinés à l'amenée sous pression de l'eau et/ou de l'air étant disposés sur la périphérie de l'ellipse elle-même.

6. Procédé selon la revendication 1, caractérisé en ce que les forages sont disposés dans la zone d'une tranchée linéaire ou courbe creusée dans la terre et dans laquelle des sources sonores (5) sont réparties régulièrement sous la forme d'éléments en plaques, et la propagation du son des sources sonores (5) est orientée vers les parois de la tranchée, les raccords de pression ou des forages pour l'amenée d'air et/ou d'eau étant disposés entre les sources sonores (5).

7. Procédé selon la revendication 1, caractérisé en ce que, dans le cas de niveaux d'eaux souterraines bas et d'un forage n'allant pas jusqu'à ce niveau d'eau, les sources sonores (5) sont mises en contact avec la formation de sol (paroi de la tranchée ou paroi du puits).

8. Procédé selon la revendication 1, caractérisé en ce que, dans le cas de formations de sol contaminées en surface, les sources sonores (5) sont disposées sur la surface plane.

9. Procédé selon la revendication 1, caractérisé en ce qu'il est prévu, pour un ou plusieurs puits exposés aux ultrasons ou pour une tranchée pourvue de puits d'eau sous pression disposés à la périphérie, il est prévu en outre des puits d'air comprimé qui sont disposés à égale distance du puits d'extraction (1) central du milieu qui est exposé aux ultrasons.

10. Procédé selon la revendication 9, caractérisé en ce que de l'air comprimé est amené par l'intermédiaire des puits d'air comprimé, lequel air comprimé ressort par le puits central (1) exposé aux ultrasons, ou de l'air est aspiré par l'intermédiaire des puits d'air comprimé, lequel air est ensuite purifié des substances polluantes au-dessus de la formation de sol contaminée.

11. Dispositif pour mettre en oeuvre le procédé selon l'une des revendications 1 à 10, caractérisé en ce qu'il est prévu un puits (1) qui est recouvert d'un tube filtrant (3), étant précisé que l'aspiration se fait par l'intermédiaire des tiges de sondage (11) et qu'il est prévu, au niveau de l'extrémité libre inférieure, la source sonore (5) dont l'élément fournissant l'énergie (bobine 13) est relié par l'intermédiaire d'un câble (6) à un générateur d'impulsions (7).

12. Dispositif selon la revendication 11, caractérisé en ce que la source sonore (5) est montée rotative par l'intermédiaire d'un entraînement en rotation (16) dans le forage (1).

13. Dispositif selon les revendications 11 à 12, caractérisé en ce que la source sonore (5) est en outre mobile axialement dans le forage afin d'exposer le forage aux ultrasons également dans son extension longitudinale.

14. Dispositif selon la revendication 11, caractérisé en ce que la source sonore se compose de deux éléments en forme de plaques à la manière de membranes (14), entre lesquels est disposée une bobine (13).

15. Dispositif selon la revendication 11, caractérisé en ce que deux sources sonores axiales (18) se font face, suivant un écartement relativement grand, et fonctionnent en push-pull.

16. Dispositif selon la revendication 11, caractérisé en ce qu'un ou plusieurs transducteurs acoustiques (5) sont disposés dans la zone d'un soufflet (19) rempli de liquide sous pression, le soufflet (19) étant appliqué par force et par complémentarité de forme au niveau de la face intérieure du tube filtrant (3).

17. Dispositif selon la revendication 11, caractérisé en ce que les sources sonores (5) sont disposées dans la zone de segments de cylindre (22) qui sont aptes à s'écarter radialement par l'intermédiaire de bras formant ressorts (21), au niveau de la face intérieure du tube filtrant (3), ou sont pressés directement contre la formation de terre.

18. Dispositif selon la revendication 11, caractérisé en ce que la source sonore (5) se compose d'une bobine bifilaire (35) qui agit par ses vibrations sur une membrane (14).

19. Dispositif selon la revendication 11, caractérisé en ce que la source sonore (5) se compose de bobines commandées indépendamment et à l'opposé l'une de l'autre, dans les parties supérieure et inférieure, les membranes (14) étant mises en vibration par l'intermédiaire de pôles magnétiques se repoussant.

20. Dispositif selon la revendication 11, caractérisé en ce que le dispositif d'enroulement des bobines magnétiques est disposé sur une surface, étant précisé qu'il est prévu des sources sonores (5) à surface latérale droite ou des sources sonores (5) à enveloppe cylindrique.
